# EUROPEAN PATENT SPECIFICATION

(11) **EP 0 854 465 B1**
(45) Date of publication and mention of the grant of the patent: **14.04.2010**
(21) Application number: 97309659.7
(22) Date of filing: 01.12.1997
(51) Int. Cl.: G09G 3/36

(54) **Driving method for liquid crystal displays with a bend alignment**
Ansteuerungsverfahren für Flüssigkristallanzeigevorrichtungen mit gekrümmter Orientierung
Méthode de commande pour dispositifs d'affichage à cristaux liquides avec orientation tordue

(30) Priority: 20.01.1997 JP 713297
(43) Date of publication of application: 22.07.1998
(73) Proprietor: Chi Mei Optoelectronics Corporation, Taiwan 74147 (TW)
(72) Inventor: Nakamura, Hajime, Yokohama-shi, Kanagawa-ken (JP); Noguchi, Michikazu, Sagamihara-shi, Kanagawa-ken (JP)
(74) Representative: Peterreins, Frank

(56) References cited:
- "A bipolar addressing scheme for a thin film transistor liquid crystal display" XEROX DISCLOSURE JOURNAL., vol. 7, no. 5, September 1982, STAMFORD, CONN US, pages 309-310, XP002062420
- LUO FANG-CHEN ET AL.: "Performance of thin film transistor addressed liquid crystal display circuits" IEEE TRANSACTIONS ON ELECTRON DEVICES., vol. ED-30, no. 3, March 1983, NEW YORK US, pages 202-206, XP002062421
- BRYER N J ET AL: "CAPACITIVELY COUPLED-TRANSISTOR POLYSILICON ACTIVE-MATRIX LCDS" PROCEEDINGS OF THE SID, vol. 28, no. 2, 1987, pages 109-113, XP000028052
- I-WEI WU: "HIGH-DEFINITION DISPLAYS AND TECHNOLOGY TRENDS IN TFT-LCDS" JOURNAL OF THE SOCIETY FOR INFORMATION DISPLAY, vol. 2, no. 1, 1 April 1994, pages 1-14, XP000482979
- MIYASHITA ET AL.: "Wide viewing angle display mode using bend-alignment liquid crystal cell" JAPANESE JOURNAL OF APPLIED PHYSICS., vol. 34, no. 2a, 1 February 1995, TOKYO JP, pages L177-L179, XP000600430
- SUEOKA K; NAKAMURA H; TAIRA Y: "INITIALIZATION OF OPTICALLY COMPENSATED BEND-MODE LCDS" , XP000826997

## Description

The present invention relates to liquid crystal displays and more particularly relates to a method for causing the liquid crystal layer to change at high speed from its initial homogeneous state to a so-called bend alignment.

The application of the liquid crystal displays have recently been expanded to a lightweight and thin display which is an alternative to the conventional CRT display. However the liquid crystal display has disadvantages in display quality, such as small viewing angle and poor motion picture display characteristic, as compared with the CRT display. The present invention is concerned with these problems.

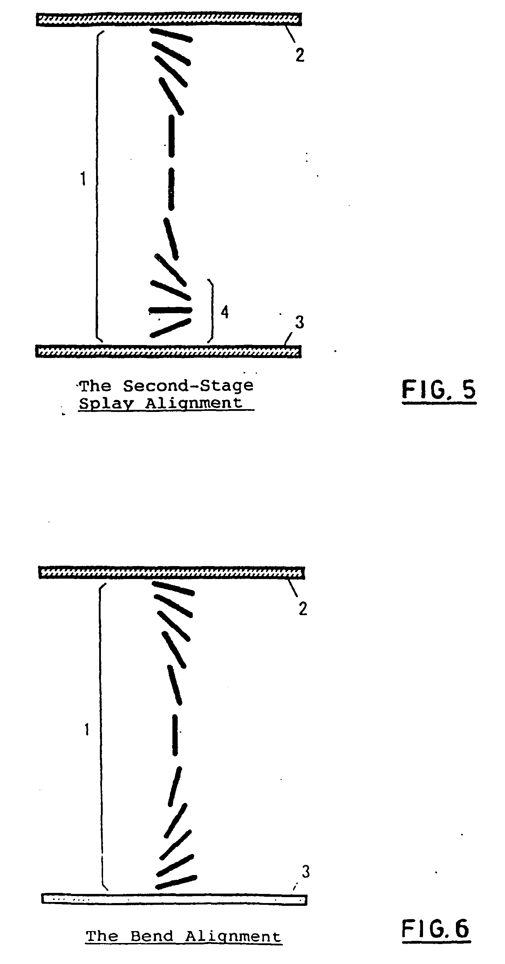

One method for solving the problems of viewing angle and motion picture display characteristic is to use a liquid crystal cell (π cell) in which a liquid crystal layer is formed by a so-called bend alignment and sandwiched between two glass substrates. The bend alignment is characterised, as shown in Figure 6, in that the alignment of liquid crystal has an angle (alignment angle) substantially horizontal to the glass substrates, the alignment angle gradually exhibits an angle vertical to the glass substrate surfaces toward the centre of the liquid crystal layer, the alignment angle gradually continuously changes so as to be horizontal to the opposed glass substrate surfaces as the distance from the centre of the liquid crystal layer increases, and there is no twisted structure over the whole liquid crystal layer. The liquid crystal display using such alignment is disclosed in Published Unexamined Patent Application No. 61-116329. In the same publication, an example utilising the π cell as a liquid crystal display is disclosed.

Further, U.S. Patent No. 5,410,422 of Philip J, Bos discloses the idea of combining an optical compensation film with such p cell to obtain a wide viewing angle. Furthermore, in recent years, as Uchida et al. disclose in Published Unexamined Patent Application No. 7-84254, the optical characteristics of the optical compensation film used with the cell is examined, and the feasibility of a wider viewing angle is suggested.

In the π cell which is a liquid crystal cell using a liquid crystal layer having a bend alignment, attention is focused on not only the wide viewing angle characteristic but also the fast response speed characteristic. This is very important in that the possibility for dramatically increasing the motion picture display characteristic is shown. Almost all the above described background art references also suggest this point and favourably look on the future potential of the π cell.

The motion picture display characteristic is an essential advantage of the p cell, and it is required to create a bend alignment as the premise for it. The reason for this is that, a liquid crystal cell to be operated as the p cell does not take the bend alignment in a state (initial state) in which no electric field or the like is applied, and merely has a homogeneous alignment. If the transition from the homogeneous state to the bend alignment cannot be performed at high speed, the good motion picture display characteristic possessed by the bend alignment cannot be fully exploited. In addition, any of the above described references does not discuss this point at all.

Further document "Initialization of optically compensated bend-mode LCDs" of SUEOKA et al. discloses methods for causing the liquid crystal layer to change its initial state to bend alignement.

The transition from the homogeneous state to the bend alignment is performed through an intermediate state called a splay alignment. When a voltage is applied to a liquid crystal layer and the applied voltage becomes equal to or higher than a certain threshold voltage V_{CR}, the electric elastic energy of the bend alignment becomes lower than the electric elastic energy of the splay alignment state caused to transition from the homogeneous state by the voltage application. Accordingly, if the electric elastic energies are simply compared, the bend alignment state is stable for a voltage equal to or higher than the threshold voltage V_{CR}, but the transition between the splay alignment state and the bend alignment state does not easily occur because an energy barrier exists between them. Further, the generation of a transition nucleus is required as a condition for the occurrence of the transition, but, since the generation energy itself is also high, it is more difficult for the transition to proceed.

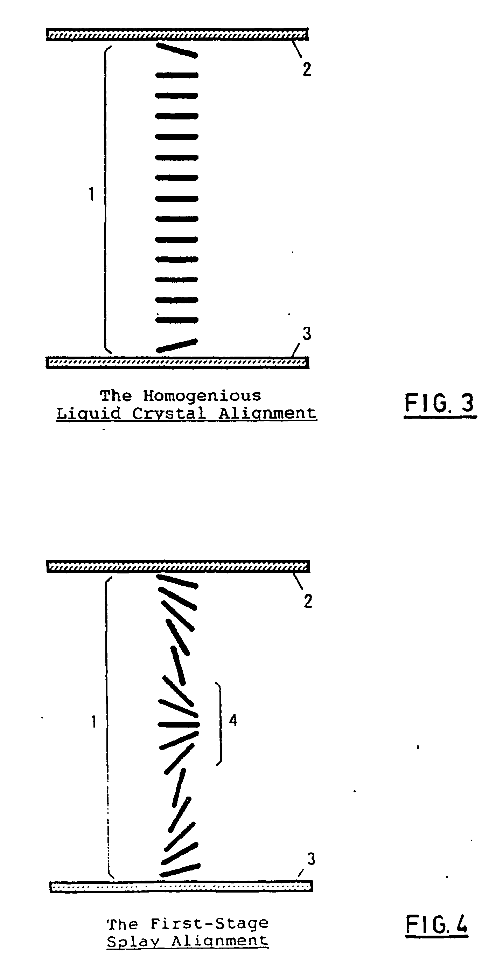

Thus, generally, when the power is turned on, a voltage several times greater than V_{CR} is applied to accelerate the transition. The process of the alignment transition of liquid crystal occurring at this point is described using Figures 3 to 6. As shown in Figure 3, initially, a liquid crystal layer 1 is in a homogeneous state. In this figure, the liquid crystal layer 1 is sandwiched between glass substrates 2 and 3. If a large voltage is applied to this, a splay alignment as shown in Figure 4 is exhibited. The splay alignment state as shown in Figure 4 is observed during a very short period of time immediately after the power is turned on, and has a symmetrical structure 4 in the centre of the cell. The splay structure characterised by having the symmetrical structure 4 as shown in Figure 4 in the centre of the cell is called a first-stage splay alignment.

The first-stage splay alignment bears a striking resemblance to the bend alignment shown in Figure 6 in the point that it is symmetrical in the centre of the cell, and accordingly the transition from the first stage splay alignment to the bend alignment is extremely fast. However, the first-stage splay alignment state is very unstable, and the symmetrical structure 4 as shown in Figure 5 quickly moves to the vicinity of the upper or lower glass substrate 2 or 3 to form a more stable second-stage splay alignment. Figure 5 shows an example in which the symmetrical structure 4 moved near the glass substrate 2. The speed of the transition from the second-stage splay alignment to the bend alignment is relatively slow.

It is reported by Oku et al. that, to compare the transition speed for the direct transition from the first-state splay alignment to the bend alignment with the transition speed for the transition from the second-stage splay alignment to the bend alignment, the former is faster by an order of magnitude (Proceedings of General Conference of the Electronic Information Communication Society, 1996, p. 88). Accordingly, the bend alignment state is preferably obtained directly from the first-stage splay alignment. However, since the first-stage splay alignment is unstable as described above, its life is short and it is difficult to maintain that state, and no method for controllably using this has been known up to the present.

More specifically, it was found that the transition from the first-stage splay alignment to the second stage alignment gradually proceeded from the outer periphery of the electrode. In particular, this tendency is remarkable for pixels of liquid crystal cells having a relatively wide electrode area.

It is considered that, since the liquid crystal cells of a matrix-driven liquid crystal display are partitioned by vertical and lateral electrodes, the nonuniform electric field in the cells contributes to this. For instance, in the commonly used driving method called a H-COM inversion, because of difference in the voltage polarity between adjacent pixels, difference between the electrode potential and the pixel electrode potential, or the like, distortion occurs in the electric field vertical to the cell surface, which should essentially be uniform, to induce a transition to the second-stage splay alignment. Since the second-stage splay alignment having occurred in the peripheral portion of a pixel is essentially stable, it causes the first-stage splay alignment existing in the centre of the pixel to transition to the second-stage splay alignment. Accordingly, it is not often the case that the first-stage splay alignment directly transitions to the bend alignment, and in most cases, it transitions to the bend state through the second-stage splay alignment. Thus, it takes more time for the whole pixel to reach the bend state.

Further, even if a certain pixel transitions to the bend alignment, it is difficult for the adjacent pixels to transition to the bend alignment as in a chain reaction. The reason for this is that, since the vertical electric field in the vicinity of electrodes existing around the pixels is smaller than the other portion, the stability of the bend alignment is small in terms of electric elastic energy, and thus the driving force for transition to the bend alignment is also small. Accordingly, the region in the vicinity of electrodes acts as a barrier to the bend alignment expansion from a pixel to a pixel.

As described above, in the conventional driving method in a cell structure having a partitioned pixel structure, the life of usable first-stage splay alignments is short and most of the first-stage splay alignments transition to second-state splay alignments having a low transition speed, and thus a sufficiently fast transition speed for the bend alignment cannot be obtained. Further, there is a possibility that the bend alignment transition between pixels is prevented by small regions of a small vertical electric field which are existing between pixels, or the transition to the bend alignment is incomplete or pixels carrying no bend alignment occur as the case may be.

It is the first object of the present invention to provide, in a liquid crystal display using a liquid crystal layer having a bend alignment, a voltage application control method for applying a voltage to the liquid crystal layer to cause transition to the bend alignment in a short time.

It is the second object of the present invention to provide, in a liquid crystal display using a liquid crystal layer having a bend alignment, a voltage application control method for applying a voltage to the liquid crystal layer to destroy the pixel regions remaining in a splay alignment state without transitioning to the bend alignment.

These objects are solved by the invention as claimed in the claim 1.

An example of this application is applied to a liquid crystal display comprising a first substrate on which thin film transistors (TFTs) are formed in a matrix, a second substrate opposed to the first substrate and having a counter electrode formed thereon, a liquid crystal layer positioned between the first substrate and the second substrate a first voltage applying unit for applying a voltage to the gate electrode of the thin film transistor, and a second voltage applying unit for applying a voltage between a signal electrode connected to the data line of the thin film transistor and the counter electrode. And, an example of this application is a voltage application driving method for quickly changing the alignment of the liquid crystal layer to a bend alignment in such thin film transistor liquid crystal display (TFT/LCD), thereby to solve the above problems, wherein a potential difference larger than 10 V is continuously or intermittently provided between the signal electrode and the counter electrode while maintaining the potential difference between the gate electrode and the signal electrode larger than 10 V. Preferably, if a voltage is intermittently applied, the on-time over which a potential difference is provided between the signal electrode and the counter electrode is equal to or longer than the time period for part of the liquid crystal layer to effectively begin a transition to the second-stage splay alignment, and the off-time over which no potential difference is provided between the signal electrode and the counter electrode is equal to or longer than the time period necessary for the liquid crystal region of the second-stage splay alignment to return to the state before the voltage application.

How the invention may be carried out will now be described by way of example only and with reference to the accompanying drawings in which:
Figure 1 is a figure showing the voltage application driving method related to an example of this application;
Figure 2 is a figure showing the voltage application driving method related to an embodiment of this application;
Figure 3 is a figure showing the initial homogeneous liquid crystal alignment state;
Figure 4 is a figure showing the liquid crystal alignment state by the first-stage splay alignment;
Figure 5 is a figure showing the liquid crystal alignment state by the second-stage splay alignment; and
Figure 6 is a figure showing the liquid crystal alignment state by the bend alignment.

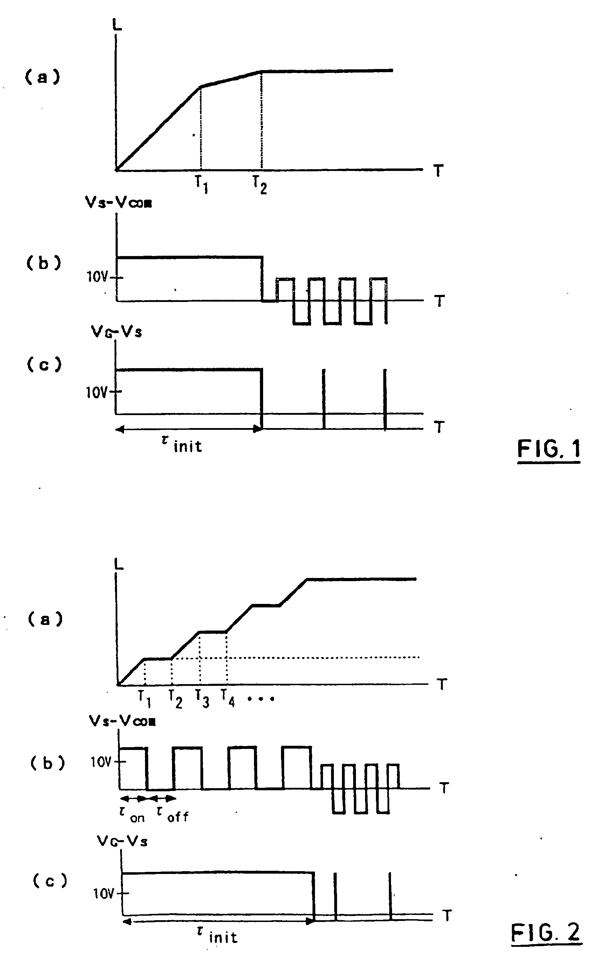

The voltage application control method according to an example is described using Figure 1. Figure 1 (a) shows the proportion (L) of the bend alignment region in relation to time (T) for the case in which a voltage shown in Figure 1 (b) is provided between the signal electrode and the counter electrode, and a voltage shown in Figure 1 (c) is provided between the gate electrode and the signal electrode. As shown in Figure 1, according to the example, the bend alignment transition of the whole display panel is caused by a single-shot pulse signal. In principle, simultaneously with or in a very short time after the turning-on of the gate, a bias signal is applied between the counter electrode and the signal electrode to cause the bend alignment.

First, to turn on the gate, the gate electrode potential V_{g} is set to 10 V d.c. or greater with respect to the signal electrode potential Vₛ. That is, a voltage is applied under a condition of V_{g}-Vₛ>10 V. V_{g}-Vₛ is preferably greater than 20 V. The first reason for the application of a voltage in such region is to ensure enough conduction between the pixel electrode for any signal electrode voltage and all pixels, thereby to provide an effective electric field for the bend alignment. Further, secondly, by making the gate electrode voltage high, the first-stage splay alignment state on the gate electrode can be maintained for a long time, and the speed of the transition to the bend alignment also becomes high.

Simultaneously with keeping V_{g} and Vₛ in such relationship, or within a very short time, a bias voltage is applied to the signal electrode potential Vₛ relative to the counter electrode potential V_{com}. Also in this case, Vₛ-V_{com}>10 V, preferably>20 V. The rise time of the pulse related to Vₛ-V_{com} is desired to be as short as possible, preferably 50 ms or less. It is because, the longer the rise time, the shorter the time period over which the first-stage splay alignment exists.

The application time of the pulse related to Vₛ-V_{com} depends on the density of the transition nucleus of the first-stage splay alignment generated in the liquid crystal by the application of the pulse, the speed of the generation region of the transition nucleus growing to the surrounding area, and the time period over which the first-stage splay alignment state transitions to the second-stage splay alignment state.

For instance, if the density of the transition nucleus of the first-stage splay alignment is sufficiently large, and by the growth of the first-stage splay region is reached in a short time, then it is only needed to apply the pulse till that time. On the other hand, if the density of the transition nucleus is small or the growth speed is slow, it is needed to apply the pulse for a long time. However, this time is restricted by the time period over which the transition nucleus of the first-stage splay alignment transitions to the second-stage splay alignment.

Referring to Figure 1 (a), it is seen that, by applying the Vₛ-V_{com} voltage, the proportion (L) of the bend alignment region linearly increases with time. In this figure, inflection points occur in L at T₁ and T₂. This is because the transition to the bend alignment for time 0 to T₁ is performed through a path of homogeneous alignment d first-stage splay alignment d bend alignment, which has a fast transition time, whereas for time T₁ and T₂, the second-stage splay alignment state intervenes in the process of the transition to the bend alignment. That is, since, after time T₁, the region of the first-stage splay alignment generated by the voltage application transitions to the second-stage splay alignment, the speed of the transition to the bend alignment (ΔL/ΔT) is different.

The voltage application method according to the embodiment of the present invention is described below. According to the embodiment, the bend alignment transition of the whole display panel is caused by an intermittent pulse signal.

The embodiment is preferred if Vₛ-V_{com} is obliged to be made small because of the restriction on the driver's breakdown voltage or the like, or if the total liquid crystal region cannot be made to transition to the first-stage splay alignment by one pulse application because of the above described generation density and growth speed of the transition nucleus of the first-stage splay alignment, or the like. In such case, the time period over which the first-stage splay alignment exists (life) is relatively short, and the increase speed of the radius of the bend alignment region is also small. Accordingly, the region of liquid crystal of the first-stage splay alignment generated by the first voltage application transitions to the second-stage splay alignment easily and in a short time, and as a result, the speed of the transition to the bend alignment becomes slow. Further, if Vₛ-V_{com} is obliged to be made small, only a low vertical electric field can occur on both sides of the surrounding electrodes, and thus pixel regions easily remain in the second-stage splay alignment without transitioning to the bend alignment.

An example of the voltage application driving waveform according to the second embodiment is shown in Figure 2. Figure 2 (a) shows the proportion (L) of the bend alignment region in relation to time (T) for the case in which a voltage shown in Figure 2 (b) is provided between the signal electrode and the counter electrode, and a voltage shown in Figure 2 (c) is provided between the gate electrode and the signal electrode. In the second embodiment, after a negative bias voltage is applied to the counter electrode relative to the signal electrode for a predetermined time (shown by τₒₙ in Figure 2 (b)), preferably 0 V (hereinafter referred to as substantially 0 V) is applied between the signal electrode and the counter electrode for a predetermined time (shown by τ_{off} in Figure 2 (b)), thereby to restore the liquid crystal region changed to the second-stage splay alignment by the first bias voltage application to the initial homogeneous state. Thereafter, by repeating a step of again applying the bias voltage e applying substantially 0 V, the homogeneous alignment is made to transition to the first-stage splay alignment and the bend alignment is obtained directly from the first-stage splay alignment, thereby to obtain a fast bend alignment transition. The embodiment utilises the fact that the speed at which the bend alignment liquid crystal region returns to be homogeneous state during the application of substantially V is sufficiently smaller than the speed at which the liquid crystal region of the second-stage splay alignment returns to the homogeneous state. This can prevent the area of the liquid region which has once become the bend alignment from being put into the homogeneous state by the application of substantially 0 V.

Vₛ-V_{com} is larger than 10 V. Further, the on-voltage application time tₒₙ is set to be substantially equal to or a little longer than the time period over which the first-stage splay alignment begins to transition to the second-stage splay alignment. The life of the first-stage splay alignment depends on the type of the liquid crystal and Vₛ-V_{com}, and thus it cannot be described sweepingly. Further, the time period t_{off} over which no bias voltage is applied (application time of substantially 0 V) is set to be substantially equal to or a little longer than the time period over which the liquid crystal region of the second-stage splay alignment is reduced to the homogeneous state. As a result, the duty ratio of the pulse with which the embodiment is operable is 30 to 70 %, preferably 40 to 60 %.

The repetition frequency is about 0.5 Hz to 10 Hz, preferably 1 to 3 Hz. Further, for V_{g}-Vₛ, a constant voltage is always provided to the gate as in the example. This voltage is a voltage which is enough to ensure any signal electrode voltage, and sufficient conduction between pixel electrodes for all pixels, and provide an effective electric field for the bend alignment.

As shown in Figure 2 (a), a liquid crystal region having the bend alignment is generated in the time period τₒₙ from time 0 to T₁. The transition to the bend alignment in the time period reaches the bend alignment state through a first-stage splay alignment from a homogeneous state which is the initial state. Accordingly, the bend alignment is reached in a very short time. Then, in the time period τ_{off} from time T₁ to T₂, the liquid crystal region having the bend alignment generated during the time period τₒₙ from time 0 to T₁ does not decrease. However, the liquid crystal region having the second splay alignment generated during the time period τₒₙ from time 0 to T₁ is restored to the initial homogeneous state. This is because the time period over which the liquid crystal in the second-stage splay alignment state returns to the homogeneous state is shorter than the time period over which the liquid crystal in the bend alignment state returns to the homogeneous state. The use of this allows the liquid crystal region having the bend alignment in the time period τₒₙ from time T₂ to T₃ to increase in addition to the liquid crystal region having the bend alignment in the time period τₒₙ from time 0 to T₁. In the time period τ_{off} from time T₃ to T₄, the liquid crystal region having the second-stage splay alignment generated in the τₒₙ time period from time T₂ to T₃ returns to the initial homogeneous state, as in the τ_{off} time period from time T₁ to T₂.

Such voltage application by intermittent pulses allows the proportion (L) of the bend alignment region to gradually increase as shown in Figure 2 (a).

The following is a result of the measurement made for the transition time from the homogeneous state to the bend alignment using actual liquid crystals according to the above two embodiments.

Those used for the measurement are liquid crystals having the physical characteristic values shown in Table 1.

**[Table 1]**

| Liquid Crystal | k1 | k3 | ΔΣ |
|---|---|---|---|
| A | 12.4 | 15.5 | 9.8 |
| B | 11.1 | 13.5 | 10.2 |
| C | 8.2 | 14.8 | 8.9 |

The single-shot pulse method, which is the example, and the intermittent pulse method (3 Hz, 50 % duty), which is the embodiment, were used. Further, as a comparative example, the H-com inversion, which is the conventional driving method, was used in which the absolute value of the pixel bias voltage was set to the value of Vₛ-V_{com}.

Table 2 shows the case in which the driving was performed under conditions of V_{g}-Vₛ = 20 V and Vₛ-V_{com} = 10 V. Numerical values in the table represent time taken for the transition to the bend alignment, and for instance, the designation of "5<" indicates that time more than five seconds is taken for the bend transition. Further, as to the case in which the whole screen does not transition to the bend alignment and splay alignment are remaining, it was represented by "X."

**[Table 2]**

| Embodiment of the Present Invention | | | Comparative Example |
|---|---|---|---|
| Liquid Crystal | Example | Embodiment | |
| A | 5< | 3 | X |
| B | 5< | 3 | 10< |
| C | 5< | 2.5 | 10< |

Now, Table 3 shows the case in which the driving was performed under conditions of V_{g}-Vₛ = 20 V and Vₛ-V_{com} = 15 V.

**[Table 3]**

| Embodiment of the Present Invention | | | Comparative Example |
|---|---|---|---|
| Liquid Crystal | Example | Embodiment | |
| A | 1.4 | 1.5 | 10< |
| B | 1.4 | 1.3 | 10< |
| C | 1.4 | 0.9 | 5< |

Now, Table 4 shows the case in which the driving was performed under conditions of V_{g}-Vₛ = 20 V and Vₛ-V_{com} = 20 V.

**[Table 4]**

| Embodiment of the Present Invention | | | Comparative Example |
|---|---|---|---|
| Liquid Crystal | Example | Embodiment | |
| A | 0.7 | 0.9 | 8 |
| B | 0.6 | 0.9 | 10 |
| C | 0.5 | 0.6 | 1.5 |

Generally viewing the above result, both the first and second embodiments have a tendency that the transition time to the bend alignment is shortened more largely than the case in which the H-com inversion which is the conventional method is used. However, this tendency also considerably depends on the physical characteristic values of the liquid crystals to be used. For instance, this tendency is remarkable for the liquid crystals A and B, but it is not so remarkable for the liquid crystal C.

Now, Tables 5 and 6 show the results of the measurement which was made using the liquid crystal C whose bend alignment transition characteristic is considered to be the best, while changing the pulse frequency, duty ratio and the like of the intermittent pulse method, which is the embodiment.

Table 5 shows the case in which the driving was performed with the intermittent pulse method under conditions of V_{g}-Vₛ = 20 V and Vₛ-V_{com} = 10 V.

**[Table 5]**

| Frequency (Hz) d | 0.5 | 1 | 2 | 3 |
|---|---|---|---|---|
| Duty Ratio (%) o | | | | |
| 20 | 4.3 | X | 4 | 4 |
| 30 | 4 | 3.5 | 3.5 | 3.5 |
| 50 | 3 | 2.5 | 2.5 | 2.5 |
| 70 | 5 | 4.5 | 3.5 | 3 |
| 80 | 2.5 | 2.5 | X | X |

Table 6 shows the case in which the driving was performed with the intermittent pulse method under conditions of V_{g}-Vₛ = 20 V and Vₛ-V_{com} = 20 V.

**[Table 6]**

| Frequency (Hz) d | 0.5 | 1 | 2 | 3 |
|---|---|---|---|---|
| Duty Ratio (%) o | | | | |
| 20 | X | X | X | X |
| 30 | 2.5 | 2.5 | 2 | 2 |
| 50 | 1.5 | 1.5 | 1 | 0.6 |
| 70 | 1.5 | 1.5 | 1 | 1 |
| 80 | 1.5 | 1.5 | 1 | X |

From the above, it is seen that a good result can be obtained when the duty ratio is in a range of about 30 to 70 %. Further, in this range, a good result can be obtained for any pulse frequency of 0.5 to 3 Hz.

Further, for the case in which the duty ratio is set to 50 % and the potential difference between the counter electrode and the signal electrode is minimised (referred to as application of substantially 0 V in this specification), the relationship between the potential difference and the bend alignment transition characteristic is shown. It is noted that V_{g}-Vₛ = 20 V and Vₛ-V_{com} = 20 V, and the pulse frequency is 3 Hz.

**[Table 7]**

| Frequency (Hz) d | A | B | C |
|---|---|---|---|
| Potential Difference (V) o | | | |
| 0 | 0.9 | 0.9 | 0.6 |
| 0.5 | 1.3 | 1.3 | 0.6 |
| 0.8 | 1.6 | 1.6 | 0.9 |
| 1 | 1.9 | 1.9 | 0.9 |
| 1.2 | 2.3 | 2.3 | 1.3 |
| 1.5 | 3.3 | 3.3 | 2.5 |

According to this, it is found that the minimum potential difference between the counter electrode and the signal electrode is most preferably maintained to be 0 V, but the problems of the invention of this application can be filly solved if it is in the order of ±1 V. And, the minimum potential difference is preferably in the range of around ±0.8 V.

In accordance with the present invention, the time taken for causing the whole panel region to transition to the bend alignment is shortened to about 1/3 to 10/1 as compared with the conventional voltage application driving method, and regions of liquid layers which do not transition to the bend alignment can be completely prevented from being left.

## Claims

1. A voltage application driving method of changing the alignment of a liquid crystal layer (1) in a liquid crystal display comprising a first substrate (2) on which thin film transistors (TFTs) are formed in a matrix, a second substrate (3) opposed to said first substrate and having a counter electrode formed thereon, the liquid crystal layer (1) positioned between said first substrate and said second substrate, a first voltage applying unit for applying a voltage to the gate electrode of said thin film transistor, and a second voltage applying unit for applying a voltage between a signal electrode connected to the data line of said thin film transistor and said counter electrode, wherein the voltage application driving method is adapted for changing an alignment of said liquid crystal layer to a bend alignment through a first stage splay alignment and a second stage splay alignment and comprising a step of maintaining the potential difference between said gate electrode and said signal electrode large enough to turn on the gate of the film transistor for a voltage application between said signal electrode and said counter electrode comprising a plurality of alternate repetitions between a first time period over which a first potential difference is provided between said signal electrode and said counter electrode, and a second time period over which a second potential difference smaller than said first potential difference is provided between said signal electrode and said counter electrode.

2. A voltage application driving method according to Claim 1, wherein the potential difference provided between said signal electrode and said counter electrode is larger than 10 V while maintaining the potential difference between said gate electrode and said signal electrode larger than 10 V.

3. A voltage application driving method according to Claim 1 or 2, wherein said liquid crystal layer (1) is provided with a bend alignment.

4. A voltage application driving method according to one of the Claims 1 to 3, wherein the time period over which the potential difference is provided between said signal electrode and said counter electrode is substantially equal to the time period over which the potential difference is maintained between said gate electrode and said signal electrode.

5. A voltage application driving method according to one of the Claims 1 to 3, wherein the time period over which the potential difference is provided between said signal electrode and said counter electrode is divided into several pieces within the time period over which the potential difference is maintained between said gate electrode and said signal electrode.

6. A voltage application driving method according to Claim 5, wherein the time period over which a potential difference is provided between said signal electrode and said counter electrode is 30 to 70 % of the time period over which a potential difference is maintained between said gate electrode and said signal electrode.

7. A voltage application driving method according to Claim 5, wherein 0+/-1 V is applied between said signal electrode and said counter electrode for a time other than the time period over which the potential difference is applied between said signal electrode and said counter electrode.

8. A voltage application driving method as claimed in Claim 2 in which the time period over which the potential difference is provided between said signal electrode and said counter electrode is at least equal to the time period for part of said liquid crystal layer to effectively begin a transition to the second-stage splay alignment, and the time period over which no potential difference is applied between said signal electrode and said counter electrode is at least equal to the time period necessary for the liquid crystal region of said second-stage splay alignment to return to the state before the voltage application.

9. A voltage application driving method according to Claim 1 wherein said second potential difference is +/-1 V.

10. A liquid crystal display incorporating means to effect the voltage application driving method as claimed in any one of claims 1 to 9.

## Patentansprüche

1. Steuerverfahren zur Spannungsapplikation zum Verändern der Ausrichtung von einer Flüssigkristallschicht (1) in einem Flüssigkristalldissplay umfassend ein erstes Substrat (2), auf dem Dünnschichttransistoren (TFTs) in einer Matrix gebildet sind, ein zweites Substrat (3) gegenüberliegend zu dem ersten Substrat mit einer Gegenelektrode darauf gebildet, wobei die Flüssigkristallschicht (1) zwischen dem ersten und dem zweiten Substrat angeordnet ist, weiter eine erste Spannungsapplizierungseinheit, um eine Spannung an der Gate-Elektrode des Dünnschichttransistors zu applizieren und eine zweite Spannungsapplizierungseinheit, um eine Spannung zwischen einer Signalelektrode, verbunden mit der Datenleitung des Dünnschichttransistors, und der Gegenelektrode zu applizieren, wobei das Steuerverfahren zur Spannungsapplikation angepasst ist, um die Ausrichtung der Flüssigkristallschicht zu ändern in eine gebogene Ausrichtung durch eine erste Phase gespreizter Ausrichtung und eine zweite Phase gespreizter Ausrichtung, und umfassend einen Schritt von Aufrechterhalten der Potenzialdifferenz zwischen der Gate-Elektrode und der Signalelektrode, die groß genug ist, um das Gate des Dünnschichttransistors anzuschalten für eine Spannungsapplikation zwischen der Signalelektrode und der Gegenelektrode umfassend mehrere alternierende Wiederholungen zwischen einer ersten Zeitperiode, über die eine erste Potenzialdifferenz zwischen der Signalelektrode und der Gegenelektrode bereitgestellt ist, und eine zweite Zeitperiode, über die eine zweite Potenzialdifferenz kleiner als die erste Potenzialdifferenz zwischen der Signalelektrode und der Gegenelektrode bereitgestellt ist.

2. Steuerverfahren zur Spannungsapplikation gemäß Anspruch 1, wobei die zwischen der Signalelektrode und der Gegenelektrode bereitgestellte Potenzialdifferenz größer als 10 V ist bei Aufrechterhalten der Potenzialdifferenz zwischen der Gate-Elektrode und der Signalelektrode größer als 10 V.

3. Steuerverfahren zur Spannungsapplikation gemäß Anspruch 1 oder 2, wobei die Flüssigkristallschicht (1) mit einer gebogener Ausrichtung bereitgestellt wird.

4. Steuerverfahren zur Spannungsapplikation gemäß einem der Ansprüche 1 bis 3, wobei die Zeitperiode, über die die Potenzialdifferenz zwischen der Signalelektrode und der Gegenelektrode bereitgestellt wird im Wesentlichen gleich der Zeitperiode ist, über die die Potenzialdifferenz zwischen der Gate-Elektrode und der Signalelektrode aufrechterhalten wird.

5. Steuerverfahren zur Spannungsapplikation gemäß einem der Ansprüche 1 bis 3, wobei die Zeitperiode, über die die zwischen der Signalelektrode und Gegenelektrode bereitgestellte Potenzialdifferenz, in mehrere Teile geteilt wird innerhalb der Zeitperiode, über die die Potenzialdifferenz aufrechterhalten wird zwischen der Gate-Elektrode und der Signalelektrode.

6. Steuerverfahren zur Spannungsapplikation gemäß Anspruch 5, wobei die Zeitperiode über die eine Potenzialdifferenz zwischen der Signalelektrode und der Gegenelektrode bereitgestellt wird, 30 bis 70 % der Zeitperiode ist, über die eine Potenzialdifferenz aufrechterhalten wird zwischen der Gate-Elektrode und der Signalelektrode.

7. Steuerverfahren zur Spannungsapplikation gemäß Anspruch 5, wobei 0+/-1 V zwischen der Signalelektrode und der Gegenelektrode appliziert werden für eine Zeit, die verschieden ist von der Zeitperiode, über die die Potenzialdifferenz zwischen der Signalelektrode und der Gegenelektrode appliziert wird.

8. Steuerverfahren zur Spannungsapplikation gemäß Anspruch 2, in dem die Zeitperiode, über die die Potenzialdifferenz zwischen der Signalelektrode und der Gegenelektrode appliziert wird, zumindest gleich ist der Zeitperiode für einen Teil der Flüssigkristallschicht, um wirksam mit einem Übergang in die zweiten Phase gespreizter Ausrichtung zu beginnen, und die Zeitperiode, über die keine Potenzialdifferenz zwischen der Signalelektrode und der Gegenelektrode appliziert wird, zumindest gleich der Zeitperiode ist, die die Flüssigkristallregion der zweiten Phase gespreizter Ausrichtung benötigt, um in den Zustand vor der Spannungsapplikation zurückzukehren.

9. Steuerverfahren zur Spannungsapplikation gemäß Anspruch 1, wobei die zweite Potenzialdifferenz +/-1 V ist.

10. Flüssigkristalldisplay, das die Mittel zum Ausführen der Steuerverfahren zur Spannungsapplikation wie beansprucht in einem der Ansprüche 1 bis 9 einschließt.

## Revendications

1. Procédé de pilotage par application de tension pour faire varier l'alignement d'une couche de cristaux liquides (1) dans un afficheur à cristaux liquides comprenant un premier substrat (2) sur lequel des transistors en film fin (TFTs) sont formés en matrice, un second substrat (3) opposé audit premier substrat et sur lequel est formée une contre électrode, la couche à cristaux liquides (1) disposée entre ledit premier substrat et ledit second substrat, une première unité d'application de tension pour appliquer une tension à l'électrode de grille du dit transistor en film fin et une seconde unité pour appliquer une tension entre une électrode de signal connectée à la ligne de données du dit transistor en film fin et ladite contre électrode, dans lequel le procédé de pilotage par application de tension est adapté pour faire varier l'alignement de ladite couche à cristaux liquides vers un alignement incurvé au moyen d'une affectation d'un alignement évasé de premier étage et d'un alignement évasé de second étage, et comprenant une étape pour maintenir la différence de potentiel entre ladite électrode de grille et ladite électrode de signal à un niveau suffisamment important pour activer la grille du transistor à film fin pendant l'application d'une tension entre ladite électrode de signal et ladite contre-électrode comprenant une pluralité de répétitions alternées entre une première période de temps pendant laquelle une première différence de potentiel est fournie entre ladite électrode de signal et ladite contre électrode et une seconde période de temps pendant laquelle une seconde différence de potentiel plus petite que ladite première différence de potentiel est fournie entre ladite électrode de signal et ladite contre électrode.

2. Procédé de pilotage par application de tension selon la revendication 1, dans lequel la différence de potentiel fournie entre ladite électrode de signal et ladite contre électrode est plus grande que 10 Volts tout en maintenant la différence de potentiel entre ladite électrode de grille et ladite électrode de signal plus grande que 10 Volts.

3. Procédé de pilotage par application de tension selon la revendication 1 ou 2, dans lequel ladite couche à cristaux liquides (1) est placée dans un alignement incurvé.

4. Procédé de pilotage par application de tension selon l'une des revendications 1 à 3, dans lequel la période de temps pendant laquelle la différence de potentiel est fournie entre ladite électrode de signal et ladite contre électrode est pratiquement égale à la période de temps pendant laquelle la différence de potentiel est maintenue entre ladite électrode de grille et ladite électrode de signal.

5. Procédé de pilotage par application de tension selon l'une des revendications 1 à 3, dans lequel la période de temps pendant laquelle la différence de potentiel est fournie entre ladite électrode de signal et ladite contre électrode est divisée en plusieurs morceaux pendant la période de temps pendant laquelle la différence de potentiel est maintenue entre ladite électrode de grille et ladite électrode de signal.

6. Procédé de pilotage par application de tension selon la revendication 5, dans lequel la période de temps pendant laquelle une différence de potentiel est fournie entre ladite électrode de signal et ladite contre électrode est de 30 à 70% de la période de temps pendant laquelle une différence de potentiel est maintenue entre ladite électrode de grille et ladite électrode de signal.

7. Procédé de pilotage par application de tension selon la revendication 5, dans lequel 0+/-1 Volts est appliqué entre ladite électrode de signal et ladite contre électrode pendant une durée autre que la période de temps pendant laquelle la différence de potentiel est appliquée entre ladite électrode de signal et ladite contre électrode.

8. Procédé de pilotage par application de tension selon la revendication 2, dans lequel la période de temps pendant laquelle la différence de potentiel est fournie entre ladite électrode de signal et ladite contre électrode est au moins égale à la période de temps pendant laquelle une partie de ladite couche à cristaux liquides commence effectivement une transition vers l'alignement évasé de second étage, et la période de temps pendant laquelle aucune différence de potentiel n'est appliquée entre ladite électrode de signal et ladite contre électrode est au moins égale à la période de temps nécessaire à la région de cristaux liquides en alignement évasé de second étage pour revenir à l'état avant l'application de la tension.

9. Procédé de pilotage par application de tension selon la revendication 1, dans lequel la seconde différence de potentiel est +/-1 Volts.

10. Afficheur à cristaux liquides incorporant des moyens pour exécuter le procédé de pilotage par application de tension selon l'une quelconque des revendications 1 à 9.
